# FASCICULE DE BREVET EUROPEEN

(11) **EP 1 094 704 B1**
(45) Date de publication et mention de la délivrance du brevet: **22.10.2003**
(21) Numéro de dépôt: 99929377.2
(22) Date de dépôt: 01.07.1999
(51) Int. Cl.: A01N 25/02, A01N 37/12

(54) **TRAITEMENT PHYTOSANITAIRE PAR ABSORPTION FOLIAIRE UTILISANT UNE HUILE MODIFIEE**
PFLANZENBEHANDLUNG DURCH BLATTABSORPTION UNTER VERWENDUNG EINES MODIFIZIERTEN ÖLS
PHYTOSANITARY TREATMENT BY FOLIAR ABSORPTION USING A MODIFIED OIL

(30) Priorité: 03.07.1998 FR 9808521
(43) Date de publication de la demande: 02.05.2001
(73) Titulaire: SOCIETE D'EXPLOITATION DE PRODUITS POUR LES INDUSTRIES CHIMIQUES-SEPPIC, F-75321 Paris Cédex 07 (FR)
(72) Inventeur: MILIUS, Alain, F-06000 Nice (FR); GAUVRIT, Christian, F-21000 Dijon (FR); MULLER, Thomas, F-21110 Izier (FR); OKORI, Nathalie, F-81700 Lempaut (FR)
(74) Mandataire: Conan, Philippe Claude
(86) Numéro de dépôt international: FR9901583
(87) Numéro de publication internationale: WO00001233

(56) Documents cités:
- EP-A- 0 933 025
- WO-A-92/06596
- WO-A-96/01047
- WO-A-96/22109
- WO-A-98/00008
- WO-A-99/27780
- WO-A-99/29170
- WO-A-99/33340
- US-A- 4 557 751
- PATENT ABSTRACTS OF JAPAN vol. 9, no. 287 (C-314), 14 novembre 1985 (1985-11-14) & JP 60 132904 A (ISHIHARA), 16 juillet 1985 (1985-07-16)

## Description

L'invention a pour objet un procédé de traitement phytosanitaire par absorption foliaire, mettant en oeuvre une association entre un principe actif et une huile modifiée et une nouvelle association pour la mise en oeuvre dudit procédé.

L'emploi d'huiles est très répandu dans le domaine phytosanitaire ; elles sont utilisées soit comme adjuvants à des formulations, pour accroître l'efficacité des matières actives, soit en tant que co-formulants. La plupart des huiles utilisées sont d'origine pétrolière et sont formulées avec des agents tensioactifs à noyaux aromatiques tels que les alkyl phénols éthoxylés. Or, les agents tensioactifs à noyau aromatique ne sont pas rapidement biodégradables et nuisent aux écosystèmes. Pour cette raison, l'utilisation de l'huile de colza ou d'esters méthyliques de l'huile de colza se développe aujourd'hui ; cependant cette huile est difficile à formuler, elle est un moins bon solvant du principe actif que les huiles d'origine pétrolière et, comme elle ne possède pas de propriétés tensioactives intrinsèques, elle doit être mise en oeuvre en association avec des agents tensioactifs à noyau aromatique. Dans la demande internationale de brevet, publiée sous le numéro WO 96/22109, les esters d'acides gras éthoxylés sont décrits comme composés auto-émulsionnables utilisables dans des formulations de principes actifs phytosanitaires tels que l'éthéphon ou le chlorprophame ; cependant rien n'est écrit, ni suggéré, sur l'activité des compositions résultant cette association. Or, la pénétration du principe actif phytosanitaire dans la plante s'effectue, soit au niveau des feuilles, par absorption foliaire, soit au niveau des racines, par absorption radiculaire ; on sait de plus que l'absorption foliaire d'un principe actif est souvent difficile ; on a observé, qu'après soixante douze heures, jusqu'à 95% du principe actif n'est toujours pas absorbé par la plante. Une période de pluie consécutive au traitement d'une culture risque donc d'induire une pollution du site, tandis qu'une période d'ensoleillement peut provoquer la dégradation du principe actif.

La demande internationale WO 92/06596 divulgue une méthode pour améliorer la pénétration d'herbicides dans les plantes en adjuvant le principe actif avec un mélange de 20 % à 60 % en poids de tensioactif anionique, 40 % à 60 % en poids d'acides gras d'esters d'acides gras ou d'un mélange des deux et de 10 % à 40 % en poids d'acides gras polyéthoxylés.

La demande de brevet japonais N° 60132904 divulgue une méthode pour améliorer la pénétration foliaire d'herbicides dans les plantes en adjuvant le principe actif avec un mélange d'huiles végétales et d'huiles végétales polyalcoxylées.

Le brevet américain 4,557,751 divulgue une composition contenant un herbicide foliaire et tensioactif choisi de préférence parmi les tensioactifs polyéthoxylés.

Les travaux de C. Gauvrit et F. Cabanne [Pesticide Science, 37, 147-153 (1993)], ont récemment permis de mettre en évidence que l'augmentation de l'efficacité des herbicides en présence d'huiles, est attribuée à un étalement des gouttelettes déposées à la surface des feuilles, et à une meilleure pénétration foliaire du principe actif herbicide. Cependant, ces effets, pour les huiles utilisées à ce jour, ne se manifestent de manière notable, que sur les plantes à cires cuticulaires cristallines, telles que par exemples les graminées, alors que sur les cires cuticulaires amorphes des dicotylédones, les effets de ces huiles sont plus modestes [C. Urvoy, M. Pollacsek et C. Gauvrit, Weed Research, 32, 375-383 (1992) ; I. Serre, F. Cabanne et C. Gauvrit, Medelingen van de Faculteit Landbouwwetenschappen Rijksuniversiteit Gent 58/3a, 795-802 (1993)]. En partant de l'hypothèse que les huiles peuvent augmenter la pénétration foliaire des produits en agissant sur la disponibilité des matières activés à la surface de la feuille et sur la mobilité des matières dans la barrière de diffusion que constitue la cuticule végétale [I. Serre, thèse de l'Université de Grenoble (1996) ; I. Serre, F. Cabanne et C. Gauvrit, British Crop Protection Conference 7B-3, 807-812 (1996)], la demanderesse a donc cherché à mettre au point un procédé de traitement phytosanitaire par absorption foliaire qui permette, en peu de temps, un taux d'absorption élevé du principe actif par la plante tout en limitant les nuisances vis à vis des écosystèmes, par la mise en oeuvre d'une composition suffisamment efficace en tant que solvant du principe actif et suffisamment stable dans le temps pour être commercialisable.

L'invention a pour objet un procédé de traitement phytosanitaire par absorption foliaire, caractérisé en ce qu'il met en oeuvre une composition comprenant au moins un principe actif phytosanitaire et au moins une huile modifiée choisie parmi les esters méthylique, éthylique, propylique linéaire ou ramifié, ou butylique linéaire ou ramifié, éthoxylés et/ou propoxylés d'huiles.

Selon un aspect particulier de la présente invention, celle-ci a pour objet un procédé tel que défini précédemment dans lequel l'huile modifiée est choisie parmi les esters méthylique, éthylique, propylique linéaire ou ramifié, ou butylique linéaire ou ramifié, éthoxylés d'huiles ayant chacun un nombre d'oxyde d'éthylène, appelé par la suite indice d'OE, compris entre 1 et 50.

Les huiles modifiées utilisées, dans le cadre de la présente invention, peuvent être d'origine minérale, végétale ou animale. Parmi les huiles modifiées d'origine minérale, que l'on peut mettre en oeuvre dans le procédé tel que défini précédemment, il y a notamment les huiles modifiées d'origine pétrolière ; parmi les huiles modifiées d'origine animale, que l'on peut mettre en oeuvre dans le procédé tel que défini précédemment, il y notamment l'huile de suif modifiée ; parmi les huiles modifiées d'origine végétale que l'on peut mettre en oeuvre dans le procédé tel que défini précédemment, il y a, par exemple, les huiles modifiées de tournesol, de lin, de ricin, de soja, de maïs, d'arachide, de coprah, d'olive, de palme, de palme hydrogénée ou de colza .

Par au moins une huile modifiée, on indique que la composition mise en oeuvre dans le procédé objet de la présente invention, peut comprendre soit une seule, soit un mélange de plusieurs huiles modifiées ; dans le damier cas il peut s'agir d'un mélange d'huiles modifiées de même origine ou d'un mélange d'huiles modifiées d'origines différentes.

Par traitement phytosanitaire, on entend dans le cadre de la présente invention, de préférence un traitement fongicide, insecticide ou herbicide .

Selon une variante particulière du procédé tel que défini précédemment, la composition phytosanitaire mise en oeuvre contient au moins une huile végétale modifiée, seule ou en mélange avec une ou plusieurs huiles modifiées de même origine ou d'origines différentes .

Selon une autre variante particulière du procédé tel que défini précédemment, la composition phytosanitaire mise en oeuvre contient en outre une huile végétale non modifiée ou un mélange d'huiles végétales non modifiées . Par huile végétale non modifiée, on entend les huiles végétales ou leurs esters alkyliques, tels que par exemple, les esters méthylique, éthylique, propylique linéaire ou ramifié, ou butylique linéaire ou ramifié .

Selon un autre aspect de la présente invention, celle-ci a pour objet une composition comprenant au moins un principe actif phytosanitaire, au moins une huile végétale modifiée et au moins une huile non modifiée.

L'huile non modifiée comprise dans la composition précédente est une huile d'origine végétale, animale ou minérale . Par huile non modifiée, on entend les huiles ou leurs esters alkyliques, tels que par exemple, les esters méthylique, éthylique, propylique linéaire ou ramifié, ou butylique linéaire ou ramifié.

L'invention a plus particulièrement pour objet une composition telle que définie précédemment dans laquelle l'huile ou le mélange d'huiles non modifiées est d'origine végétale et est de préférence choisie parmi les huiles de tournesol, de lin, de ricin, de soja, de maïs, d'arachide, de coprah, d'olive, de palme, de palme hydrogénée ou de colza.

L'invention a plus particulièrement pour objet une composition telle que définie précédemment qui comprend au moins un ester méthylique éthoxylé d'une huile végétale ayant un indice d'OE compris entre 1 et 4, plus particulièrement égal à 1 ou 2 et au moins une huile non modifiée. Selon un aspect tout particulier de la présente invention, la composition comprend un ester méthylique éthoxylé d'une huile végétale et la même huile végétale non modifiée. Le rapport pondéral, ester d'huile végétale éthoxylée / huile végétale non modifiée, est en général compris entre 1/50 et 50/1 et plus particulièrement entre 1/9 et 9/1.

Pour améliorer sa tenue au froid, l'huile alkoxylée peut être préparée en incorporant, avant son alkoxylation, de 1% à 10% en poids de glycérol. Ce problème peut être également résolu en associant dans une même composition, une huile végétale alkoxylée telle que définie précédemment et un ester alkylique alkoxylé d'huile végétale, tel que défini précédemment, et plus particulièrement un ester méthylique, éthylique, propylique linéaire ou ramifié, ou butylique linéaire ou ramifié, éthoxylé et/ou propoxylé d'une huile végétale et, plus particulièrement, en associant une huile végétale éthoxylée ayant un indice d'OE compris entre 10 et 40 et de préférence supérieur ou égal à 15 et inférieur ou égal à 30, avec un ester méthylique éthoxylé d'une huile végétale ayant un indice d'OE compris entre 1 et 4, de préférence égal à 1 ou 2.
Selon un dernier aspect de la présente invention celle-ci a pour objet une huile végétale modifiée susceptible d'être obtenue par mélange, en présence d'un catalyseur basique, de 1 à 10 parties de glycérol pour 100 parties d'une huile végétale non modifiée choisie parmi l'huile de tournesol, l'huile de lin, l'huile de ricin, l'huile de soja, l'huile de maïs, l'huile d'arachide, l'huile de coprah, l'huile d'olive, l'huile de palme, ou l'huile de palme hydrogénée, puis en alkoxylant le mélange résultant; et plus particulièrement une huile végétale modifiée telle que définie précédemment, pour laquelle le degrés d'éthoxylation moyen est environ supérieur ou égal à 10, de préférence supérieur ou égal à 15, et inférieur ou égal à 40, et de préférence inférieur ou égal à 30 .

### EXEMPLE 1 : PREPARATION D'HUILES MODIFIEES

### A) Préparation d'esters méthyliques éthoxylés d'huile de colza (mis en oeuvre dans le procédé selon l'invention)

A partir de l'ester méthylique d'huile de colza, par réaction, pendant 45 minutes environ à 180°C, avec la quantité d'oxyde d'éthylène nécessaire à l'obtention du rapport molaire désiré, sous une pression de 4,5 bars, en présence d'un catalyseur basique, puis refroidissement et neutralisation du catalyseur, les esters méthyliques d'huiles de colza éthoxylés suivants ont été préparés :

| COMPOSE | INDICE D'ETHOXYLATION |
|---|---|
| 2 | 1 |
| 3 | 2 |
| 4 | 3 |
| 5 | 4 |
| 6 | 6 |
| 7 | 8 |

### B) Préparation d'huiles de colza à 2% glycérol éthoxylées

En mettant en oeuvre le procédé d'éthoxylation décrit au paragraphe précédent, en présence de 2% en poids de glycérol, sur l'huile de colza, on obtient les huiles de colza à 2 % de glycérol éthoxylées suivantes :

| COMPOSE | INDICE D'ETHOXYLATION |
|---|---|
| 8 | 15 |
| 9 | 20 |
| 10 | 25 |

### C) Préparation d'huiles de colza à x% de glycérol éthoxylées

En mettant en oeuvre le procédé d'éthoxylation décrit au paragraphe précédent, sur l'huile de colza en présence de quantités variables de glycérol, on obtient les huiles de colza à x% de glycérol éthoxylées suivantes :

| COMPOSE | INDICE D'ETHOXYLATION | % GLYCEROL |
|---|---|---|
| 11 | 20 | 1 |
| 12 | 20 | 2 |
| 13 | 20 | 5 |
| 14 | 20 | 10 |
| 15 | 0 | 2 |
| 16 | 3 | 2 |
| 17 | 6 | 2 |
| 18 | 10 | 2 |
| 19 | 20 | 2 |
| 20 | 30 | 2 |
| 21 | 40 | 2 |

### D) Préparation d'huiles de lin à 2% de glycérol éthoxylées

En mettant en oeuvre le procédé d'éthoxylation décrit au paragraphe A en présence de 2% en poids de glycérol, sur l'huile de lin, on obtient les huiles de lin à 2% de glycérol éthoxylées suivantes :

| COMPOSE | INDICE D'ETHOXYLATION | % GLYCEROL |
|---|---|---|
| 22 | 0 | 2 |
| 23 | 10 | 2 |
| 24 | 20 | 2 |
| 25 | 30 | 2 |
| 26 | 40 | 2 |

### E) Préparation d'esters méthyliques éthoxylés d'huile de tournesol

En mettant en oeuvre le procédé d'éthoxylation décrit au paragraphe précédent, sur l'ester méthylique d'huile de tournesol, on obtient les esters méthyliques éthoxylés d'huile de tournesol suivants :

| COMPOSE | INDICE D'ETHOXYLATION |
|---|---|
| 27 | 2 |

### F) Préparation d'huiles de tournesol à 4% de glycérol éthoxylées

En mettant en oeuvre le procédé d'éthoxylation décrit au paragraphe A en présence de 4% en poids de glycérol, sur l'huile de tournesol, on obtient les huiles de tournesol à 4% de glycérol_éthoxylées suivantes :

| COMPOSE | INDICE D'ETHOXYLATION | % GLYCEROL |
|---|---|---|
| 28 | 0 | 4 |
| 29 | 1 | 4 |
| 30 | 3 | 4 |
| 31 | 6 | 4 |
| 32 | 10 | 4 |
| 33 | 20 | 4 |
| 34 | 30 | 4 |
| 35 | 40 | 4 |

### G) Préparation d'huiles de maïs à 2% de glycerol éthoxylées

En mettant en oeuvre le procédé d'éthoxylation décrit au paragraphe A en présence de 2% en poids de glycérol, sur l'huile de maïs, on obtient les huiles de maïs à 2% de glycérol_éthoxylées suivantes :

| COMPOSE | INDICE D'ETHOXYLATION | % GLYCEROL |
|---|---|---|
| 36 | 0 | 2 |
| 37 | 10 | 2 |
| 38 | 20 | 2 |
| 39 | 30 | 2 |
| 40 | 40 | 2 |

### EXEMPLE 2 : EVALUATION PHYSICO-CHIMIQUE DES HUILES MODIFIEES

Les solubilités dans l'eau et dans une solution aqueuse à 10% en poids de lauryl éther sulfate de sodium, le pouvoir émulsionnant le pouvoir auto-émulsionnant et le pouvoir mouillant ont été évalués selon des méthodes classiques, pour chacune des huiles modifiées préparées. Il en résulte que les composés 2, 3, 8 à 13, 19 à 21, 24 à 27, 33 à 35 et 38 à 40 sont plus appropriés que les autres à la mise en oeuvre du procédé objet de la présente invention.

### EXEMPLE 3 : ETUDE DE LA CAPACITE DES HUILES VEGETALES MODIFIEES SELON L'INVENTION A STIMULER LA PENETRATION FOLIAIRE D'UN PRINCIPE ACTIF PHYTOSANITAIRE.

### A) Compositions de phenmédiphame

On a comparé la pénétration dans les feuilles d'orge (*Hordeum vulgare*), du phenmédiphame, qui un herbicide ayant un point de fusion élevé ( supérieur à 100°C) dénommé 3-[(méthoxy carbonyl) amino] phényl (3-méthylphényl) carbamate, seul ou en association avec des huiles modifiées, suivant le mode opératoire suivant: Le phenmédiphame marqué au carbone 14 est mis en solution (42 bq µL⁻¹), en présence ou en l'absence d'huiles végétales modifiées (environ 10nM), dans l'acétone, solvant qui n'affecte pas les cires cuticulaires et qui, en s'évaporant rapidement, n'interfère pas avec le processus de pénétration. Dix gouttes sont appliquées sur la surface adaxiale de la première feuille . Au bout de 0, 4, 6, 24 ou 72 heures, le produit non pénétré est lavé par 0,5mL d'acétone et la radioactivité mesurée par scintillation liquide. La radioactivité présente dans la feuille traitée et dans le reste de la plante est déterminée dans le dioxyde de carbone obtenu après combustion du tissu Les résultats, exprimés en pourcentage de principe actif ayant pénétré dans la feuille sont exposées dans le tableau suivant :

| | PENETRATION FOLIAIRE A : | | |
|---|---|---|---|
| COMPOSITION | 06 HEURES | 24 HEURES | 72 HEURES |
| PHENMEDIPHAME SEUL | | | <10% |
| PHENMEDIPHAME + COMPOSE 36 | ^{≈}45% | ^{≈}80% | ^{≈}80% |
| PHENMEDIPHAME + COMPOSE 37 | ^{≈}40% | ^{≈}60% | ^{≈}70% |
| PHENMEDIPHAME + COMPOSE 38 | ^{≈}25% | ^{≈}50% | ^{≈}55% |
| PHENMEDIPHAME + COMPOSE 39 | ^{≈}20% | ^{≈}40% | ^{≈}55% |
| PHENMEDIPHAME + COMPOSE 40 | ^{≈}10% | ^{≈}30% | ^{≈}40% |
| PHENMEDIPHAME + COMPOSE 22 | ^{≈}75% | >80% | >80% |
| PHENMEDIPHAME + COMPOSE 23 | ^{≈}40% | ^{≈}70% | ^{≈}75% |
| PHENMEDIPHAME + COMPOSE 24 | ^{≈}20% | ^{≈}50% | ^{≈}55% |
| PHENMEDIPHAME + COMPOSE 25 | ^{≈}20% | ^{≈}50% | ^{≈}50% |
| PHENMEDIPHAME + COMPOSE 26 | ^{≈}10% | ^{≈}40% | ^{≈}35% |
| PHENMEDIPHAME + COMPOSE 15 | ^{≈}65% | ^{≈}80% | >90% |
| PHENMEDIPHAME + COMPOSE 16 | ^{≈}60% | ^{≈}75% | ^{≈}80% |
| PHENMEDIPHAME + COMPOSE 17 | ^{≈}55% | ^{≈}70% | ^{≈}80% |
| PHENMEDIPHAME + COMPOSE 18 | ^{≈}50% | ^{≈}70% | ^{≈}80% |
| PHENMEDIPHAME + COMPOSE 19 | ^{≈}25% | ^{≈}55% | ^{≈}70% |
| PHENMEDIPHAME + COMPOSE 20 | ^{≈}25% | ^{≈}55% | ^{≈}75% |
| PHENMEDIPHAME + COMPOSE 21 | ^{≈}15% | ^{≈}45% | ^{≈}65% |
| PHENMEDIPHAME + COMPOSE 28 | ^{≈}80% | ^{≈}75% | ^{≈}75% |
| PHENMEDIPHAME + COMPOSE 29 | ^{≈}80% | ^{≈}85% | ^{≈}90% |
| PHENMEDIPHAME + COMPOSE 30 | ^{≈}80% | ^{≈}85% | ^{≈}90% |
| PHENMEDIPHAME + COMPOSE 31 | ^{≈}60% | ^{≈}65% | ^{≈}60% |
| PHENMEDIPHAME + COMPOSE 32 | ^{≈}60% | ^{≈}75% | ^{≈}90% |
| PHENMEDIPHAME + COMPOSE 33 | ^{≈}35% | ^{≈}55% | ^{≈}60% |
| PHENMEDIPHAME + COMPOSE 34 | ^{≈}35% | ^{≈}60% | ^{≈}65% |
| PHENMEDIPHAME + COMPOSE 35 | ^{≈}30% | ^{≈}50% | ^{≈}60% |
| PHENMEDIPHAME + COMPOSE 11 | ^{≈}50% | ^{≈}75% | ^{≈}80% |
| PHENMEDIPHAME + COMPOSE 12 | ^{≈}50% | ^{≈}75% | ^{≈}75% |
| PHENMEDIPHAME + COMPOSE 13 | ^{≈}50% | ^{≈}75% | ^{≈}70% |
| PHENMEDIPHAME + COMPOSE 14 | ^{≈}50% | ^{≈}75% | ^{≈}75% |
| PHENMEDIPHAME + COMPOSE 27 | >80% | ^{≈}85% | ^{≈}90% |
| PHENMEDIPHAME + COMPOSE 1 | ^{≈}95% | ^{≈}90% | ^{≈}90% |
| PHENMEDIPHAME + COMPOSE 2 | ^{≈}90% | ^{≈}90% | ^{≈}90% |
| PHENMEDIPHAME + COMPOSE 3 | ^{≈}85% | ^{≈}90% | ^{≈}90% |
| PHENMEDIPHAME + COMPOSE 4 | ^{≈}80% | ^{≈}85% | ^{≈}90% |
| PHENMEDIPHAME + COMPOSE 5 | ^{≈}80% | ^{≈}85% | ^{≈}90% |
| PHENMEDIPHAME + COMPOSE 6 | ^{≈}75% | ^{≈}75% | ^{≈}75% |
| PHENMEDIPHAME + COMPOSE 7 | ^{≈}65% | ^{≈}75% | ^{≈}80% |

## Revendications

1. Procédé de traitement phytosanitaire par absorption foliaire, **caractérisé en ce qu'**il met en oeuvre une composition comprenant au moins un principe actif phytosanitaire et au moins une huile modifiée choisie parmi les esters méthylique, éthylique, propylique linéaire ou ramifié, ou butylique linéaire ou ramifié, éthoxylés et/ou propoxylés d'huiles.

2. Procédé tel que défini à la revendication 1, **caractérisé en ce que** l'huile modifiée est choisie parmi les esters méthylique, éthylique, propylique linéaire ou ramifié, ou butylique linéaire ou ramifié, éthoxylé d'huiles, chacun ayant un Indice d'OE compris entre 1 et 50 .

3. Procédé tel que défini à l'une des revendications 1 ou 2, dans lequel la composition mise en oeuvre comprend au moins une ou plusieurs huiles modifiées d'origine végétale choisie parmi les huiles modifiées de tournesol, de lin, de ricin, de soja, de maïs, d'arachide, de coprah, d'olive, de palme, de palme hydrogénée ou de colza.

4. Procédé tel que défini à l'une des revendication 3, dans lequel l'huile végétale modifiée est un ester méthylique éthoxylé ayant un indice d'OE compris entre 1 et 4.

5. Procédé tel que défini à la revendication 4, dans lequel l'huile végétale modifiée est un ester méthylique éthoxylé ayant un indice d'OE égal à 1 ou 2.

6. Procédé tel que défini à la revendication 5, dans lequel la composition mise en oeuvre contient en outre une huile végétale ou un mélange d'huiles végétales .

7. Procédé tel que défini à l'une des revendications 1 à 6, dans lequel le principe actif est un herbicide.

8. Composition comprenant au moins un principe actif phytosanitaire, au moins une huile végétale modifiée choisie parmi les esters méthylique, éthylique, propylique linéaire ou ramifié, ou butylique linéaire ou ramifié, éthoxylés et/ou propoxylés d'huiles végétales et au moins une huile non modifiée.

9. Composition telle que définie à la revendication 8, dans laquelle l'huile non modifiée ou le mélange d'huiles non modifiées est d'origine végétale et est de préférence choisi parmi les huiles de tournesol, de lin, de ricin, de soja, de maïs, d'arachide, de coprah, d'olive, de palme, de palme hydrogénée ou de colza .

10. Composition telle que définie à la revendication 8, dans laquelle l'huile végétale modifiée est un ester méthylique éthoxylé ayant un indice d'OE compris entre 1 et 4,

11. Composition telle que définie à la revendication 10, dans laquelle l'huile végétale modifiée est un ester méthylique éthoxylé ayant un indice d'OE égal à 1 ou 2.

12. Composition, telle que définie à l'une des revendications 8 à 11, dans laquelle l'huile végétale modifiée et l'huile végétale non modifiée sont issues du même végétal .

13. Composition, telle que définie à l'une des revendications 8 à 12, dans laquelle le rapport pondéral : huile végétale modifiée / huile non modifiée, est compris entre 1/50 et 50/1 et plus particulièrement entre 1/9 et 9/1 .

14. Composition, telle que définie à l'une des revendications 8 à 13 dont les huiles modifiées sont susceptibles d'être obtenues par mélange, en présence d'un catalyseur basique, de 1 à 10 parties de glycérol pour 100 parties d'huiles non modifiées, puis par alkoxylation du mélange résultant.

15. Composition, telle que définie à l'une des revendications 8 à 14 comprenant au moins une huile végétale alkoxylée et au moins un ester alkylique alkoxylé d'huile végétale, plus particulièrement comprenant un ester méthylique, éthylique, propylique linéaire ou ramifié, ou butylique linéaire ou ramifié, éthoxylé et/ou propoxylé d'une huile végétale et une huile végétale éthoxylée et/ou propoxylée , et tout particulièrement comprenant un ester méthylique éthoxylé d'une huile végétale ayant un indice d'OE compris entre 1 et 4, et de préférence égal à 1 ou 2 et une huile végétale éthoxylée ayant un indice d'OE compris entre 10 et 40 et de préférence supérieur ou égal à 15 et inférieur ou égal à 30.

## Patentansprüche

1. Verfahren zur phytosanitären Behandlung durch Blattabsorption, **dadurch gekennzeichnet, dass** es eine Zusammensetzung einsetzt, die mindestens einen phytosanitären Wirkstoff und mindestens ein modifiziertes Öl umfasst, das unter den Methyl-, Ethyl-, linearen oder verzweigten Propyl-, linearen oder verzweigten Butyl-, ethoxylierten und/oder propoxylierten Estern von Ölen ausgewählt wird.

2. Verfahren, wie in Anspruch 1 definiert, **dadurch gekennzeichnet, dass** das modifizierte Öl unter den Methyl-, Ethyl-, linearen oder verzweigten Propyl-, linearen oder verzweigten Butyl-, ethoxylierten Estern von Ölen ausgewählt wird, die jeweils einen EO-Index zwischen 1 und 50 aufweisen.

3. Verfahren, wie in einem der Ansprüche 1 oder 2 definiert, bei dem die eingesetzte Zusammensetzung mindestens ein oder mehrere modifizierte Öle pflanzlichen Ursprungs umfasst, die unter den modifizierten Ölen von Sonnenblume, Leinsamen, Rizinus, Soja, Mais, Erdnuss, Kopra, Olive, Palme, wasserstoffhaltiger Palme oder Raps ausgewählt werden.

4. Verfahren, wie in einem der Ansprüche 1 bis 3 definiert, bei dem das modifizierte pflanzliche Öl ein ethoxylierter Methylester mit einem EO-Index zwischen 1 und 4 ist.

5. Verfahren, wie in Anspruch 4 definiert, bei dem das modifizierte pflanzliche Öl ein ethoxyliertes Methylester mit einem EO-Index gleich 1 oder 2 ist.

6. Verfahren, wie in Anspruch 5 definiert, bei dem die eingesetzte Zusammensetzung ferner ein pflanzliches Öl oder eine Mischung von pflanzlichen Ölen enthält.

7. Verfahren, wie in einem der Ansprüche 1 bis 6 definiert, bei dem der Wirkstoff ein Herbizid ist.

8. Zusammensetzung, umfassend mindestens einen phytosanitären Wirkstoff, mindestens ein modifiziertes pflanzliches Öl, das unter den Methyl-, Ethyl-, linearen oder verzweigten Propyl-, linearen oder verzweigten Butyl-, ethoxylierten und/oder propoxylierten Estern von pflanzlichen Ölen ausgewählt wird, und mindestens ein nicht modifiziertes Öl.

9. Zusammensetzung, wie in Anspruch 8 definiert, bei der das nicht modifizierte Öl oder die Mischung von nicht modifizierten Ölen pflanzlichen Ursprungs ist und vorzugsweise unter den Ölen von Sonnenblume, Leinsamen, Rizinus, Soja, Mais, Erdnuss, Kopra, Olive, Palme, wasserstoffhaltiger Palme oder Raps ausgewählt wird.

10. Zusammensetzung, wie in Anspruch 8 definiert, bei der das modifizierte pflanzliche Öl ein ethoxylierter Methylester mit einem EO-Index zwischen 1 und 4 ist.

11. Zusammensetzung, wie in Anspruch 10 definiert, bei der das modifizierte pflanzliche Öl ein ethoxylierter Methylester mit einem EO-Index gleich 1 oder 2 ist.

12. Zusammensetzung, wie in einem der Ansprüche 8 bis 11 definiert, bei der das modifizierte pflanzliche Öl und das nicht modifizierte pflanzliche Öl von derselben Pflanze stammen.

13. Zusammensetzung, wie in einem der Ansprüche 8 bis 12 definiert, bei der das Gewichtsverhältnis: modifiziertes pflanzliches Öl / nicht modifiziertes pflanzliches Öl zwischen 1/50 und 50/1 und insbesondere zwischen 1/9 und 9/1 liegt.

14. Zusammensetzung, wie in einem der Ansprüche 8 bis 13 definiert, deren modifizierte Öle durch Mischung in Gegenwart eines basischen Katalysators von 1 bis 10 Teilen Glycerin auf 100 Teile nicht modifizierte Öle und anschließende Alkoxylation der erhaltenen Mischung hergestellt werden können.

15. Zusammensetzung, wie in einem der Ansprüche 8 bis 14 definiert, umfassend mindestens ein alkoxyliertes pflanzliches Öl und mindestens einen alkoxylierten Alkylester eines pflanzlichen Öls, insbesondere umfassend einen Methyl-, Ethyl-, linearen oder verzweigten Propyl-, linearen oder verzweigten Butyl-, ethoxylierten und/oder propoxylierten Ester eines pflanzlichen Öls und ein ethoxyliertes und/oder propoxyliertes pflanzliches Öl, und insbesondere umfassend einen ethoxylierten Methylester eines pflanzlichen Öls mit einem EO-Index zwischen 1 und 4 und vorzugsweise gleich 1 oder 2 und ein ethoxyliertes pflanzliches Öl mit einem EO-Index zwischen 10 und 40 und vorzugsweise größer oder gleich 15 und kleiner oder gleich 30.

## Claims

1. Method of plant-protection treatment by leaf absorption, **characterized in that** it uses a composition comprising at least one plant-protection active ingredient and at least one modified oil chosen from ethoxylated and/or propoxylated methyl, ethyl, linear or branched propyl, or linear or branched butyl esters of oils.

2. Method as defined in Claim 1, **characterized in that** the modified oil is chosen from ethoxylated methyl, ethyl, linear or branched propyl, or linear or branched butyl esters of oils, each having an EO value of between 1 and 50.

3. Method as defined in either of Claims 1 and 2, in which the composition used comprises at least one or more modified oils of plant origin chosen from modified sunflower, linseed, castor, soybean, corn, groundnut, copra, olive, palm, hydrogenated palm or rapeseed oils.

4. Method as defined in Claim 3, in which the modified vegetable oil is an ethoxylated methyl ester having an EO value of between 1 and 4.

5. Method as defined in Claim 4, in which the modified vegetable oil is an ethoxylated methyl ester having an EO value equal to 1 or 2.

6. Method as defined in Claim 5, in which the composition used contains, in addition, vegetable oil or a mixture of vegetable oils.

7. Method as defined in one of Claims 1 to 6, in which the active ingredient is a herbicide.

8. Composition comprising at least one plant-protection active ingredient, at least one modified vegetable oil chosen from ethoxylated and/or propoxylated methyl, ethyl, linear or branched propyl, or linear or branched butyl esters of vegetable oils and at least one unmodified oil.

9. Composition as defined in Claim 8, in which the unmodified oil or the mixture of unmodified oils is of plant origin and is preferably chosen from sunflower, linseed, castor, soybean, corn, groundnut, copra, olive, palm, hydrogenated palm or rapeseed oils.

10. Composition as defined in Claim 8, in which the modified vegetable oil is an ethoxylated methyl ester having an EO value of between 1 and 4.

11. Composition as defined in Claim 10, in which the modified vegetable oil is an ethoxylated methyl ester having an EO value equal to 1 or 2.

12. Composition as defined in one of Claims 8 to 11, in which the modified vegetable oil and the unmodified vegetable oil are derived from the same plant.

13. Composition as defined in one of Claims 8 to 12, in which the modified vegetable oil/unmodified oil weight ratio is between 1/50 and 50/1 and more particularly between 1/9 and 9/1.

14. Composition as defined in one of Claims 8 to 13, in which the modified oils are capable of being obtained by mixing, in the presence of a basic catalyst, from 1 to 10 parts of glycerol per 100 parts of unmodified oils, and then alkoxylating the resulting mixture.

15. Composition as defined in one of Claims 8 to 14, comprising at least one alkoxylated vegetable oil and at least one alkoxylated alkyl ester of a vegetable oil, more particularly comprising an ethoxylated and/or propoxylated methyl, ethyl, linear or branched propyl, or linear or branched butyl ester of a vegetable oil and one ethoxylated and/or propoxylated vegetable oil, and most particularly comprising an ethoxylated methyl ester of a vegetable oil having an EO value of between 1 and 4, and preferably equal to 1 or 2 and an ethoxylated vegetable oil having an EO value of between 10 and 40 and preferably greater than or equal to 15 and less than or equal to 30.
